**Europäisches Patentamt**

**European Patent Office**

**Office européen des brevets**

(19)

(11) Veröffentlichungsnummer : **0 315 137 B1**

(12) **EUROPÄISCHE PATENTSCHRIFT**

(45) Veröffentlichungstag der Patentschrift :
06.03.91 Patentblatt 91/10

(51) Int. Cl.⁵ : **F16C 3/10**

(21) Anmeldenummer : 88118229.9

(22) Anmeldetag : 02.11.88

(54) Verfahren zur Herstellung von Kurbelwellen.

(30) Priorität : 05.11.87 DE 3737601
15.11.87 DE 3738808

(43) Veröffentlichungstag der Anmeldung :
10.05.89 Patentblatt 89/19

(45) Bekanntmachung des Hinweises auf die
Patenterteilung :
06.03.91 Patentblatt 91/10

(84) Benannte Vertragsstaaten :
BE CH DE ES FR GB IT LI NL SE

(56) Entgegenhaltungen :
DE-B- 2 616 523
GB-A- 1 062 374
US-A- 4 622 864

(73) Patentinhaber : Emitec Gesellschaft für
Emissionstechnologie mbH
Hauptstrasse 150
W-5204 Lohmar 1 (DE)

(72) Erfinder : Maus, Wolfgang
Gut Horst
W-5060 Bergisch Gladbach 1 (DE)
Erfinder : Swars, Helmut
Riedweg 11
W-5060 Bergisch Gladbach 1 (DE)
Erfinder : Frielingsdorf, Herbert
Südstrasse 50a
W-5204 Lohmar (DE)
Erfinder : Schwarz, Engelbert
Hardtstrasse 13
W-5207 Ruppichteroth (DE)
Erfinder : Grewe, Heribert
Auf dem Heidgen 42
W-5063 Overath (DE)
Erfinder : Weiss, Karl, Dr.
Kastanienweg 24
W-5205 St. Augustin (DE)
Erfinder : Riemscheid, Helmut
Heiligenstock 53
W-5204 Lohmar 21 (DE)

(74) Vertreter : Neumann, Ernst Dieter, Dipl.-Ing. et
al
HARWARDT NEUMANN PATENTANWÄLTE
Scheerengasse 2 Postfach 1455
W-5200 Siegburg (DE)

## Beschreibung

Die Erfindung betrifft ein Verfahren zur Herstellung von Kurbelwellen und Wellenzapfen, wobei die Kurbelwangen aus einzeln hergestellten und anschließend gefügten Kurbelwangen mit Bohrungen versehen sind und die Wellenzapfen als Hohlkörper ausgeführt sind. Die Erfindung betrifft weiter eine gebaute Kurbelwelle, bestehend zumindest aus Kurbelwangen und Wellenzapfen, mit unter plastischer Umformung hergestellter Fügeverbindung zwischen Kurbelwangen und Wellenzapfen, wobei die Wellenzapfen zur Verbindung mit ihren Enden in Öffnungen in den Kurbelwangen eingesetzt sind. Kurbelwellen dieser Art, insbesondere mit mehreren Kröpfungen, kommen vor allem in Brennkraftmaschinen zur Anwendung. Dies stellt zugleich den schwierigsten höchstbelasteten Anwendungsbereich dar. Daneben sind jedoch Kurbeltriebe in vielen anderen Bereichen der Steuerung bzw. Energieumsetzung, häufig als einfach gekröpfte Kurbel zu finden.

Kurbelwellen für kleinere Kolbenmaschinen, insbesondere Otto- und Diesel-Motoren werden oft in der Kokille gegossen oder im Gesenk geschmiedet einstückig hergestellt ; die Zapfen werden anschließend mechanisch bearbeitet und schließlich gehärtet. Dadurch, daß diese Arbeiten an dem mehrfach gekröpften Werkstück ausgeführt werden müssen, sind sie verhältnismäßig aufwendig. Kurbelwellen für größere Motoren werden dagegen aus Einzelteilen aufgebaut, wie sie unter Berücksichtigung der fertigungstechnischen Möglichkeiten zur Verfügung stehen ; typische Lösungen zeigen die DE-B-16 25 579, wo die Trennungslinie zwischen den Einzelteilen durch die Wangen verläuft und die DE-B-20 23 364, wo die Zapfen geteilt sind. Durchweg werden die Einzelteile durch Schweißen miteinander verbunden ; dies gilt selbst dann, wenn die Kurbelwelle gemäß der (DE-C-498 170) aus aneinandergesetzten Blechpreßlingen aufgebaut werden soll. Aus der (DE-C-848 728) ist dem Fachmann auch bekannt, daß die Kurbelwelle zur Gewichtsersparnis hohl ausgeführt werden kann und für Zapfen und Wangen jeweils unterschiedliche Werkstoffe verwendet werden können, deren jeder den spezifischen, unterschiedlichen Belastungen gewachsen ist, denen diese Bauteile ausgesetzt sind. Aus der DE-A-19 22 488 ist der Einsatz einer der Verbesserung der Haftung zwischen den durch Elektronenstrahlschweißen miteinander verbundenen Einzelteilen dienenden Zwischenschicht bekannt. Die DE-A-19 51 097 zeigt, daß vor dem Zusammenbau der Einzelteile einer Welle auf einen Lagerzapfen ein fertiges Antriebselement nämlich ein Zahnrad) aufgeschoben und befestigt werden kann. Der gleichen Schrift kann der Fachmann auch den Vorschlag entnehmen, die Einzelteile an den Trennflächen so auszubilden, daß sie vor dem Verschweißen ineinandergeschoben werden können, um eine Montagehilfe zu bieten. Aus der US 46 22 864 ist eine aus einzelnen Kurbelwangen und teilweise hohlen Wellenzapfen aufgebaute Kurbelwelle für Brennkraftmaschinen bekannt, bei der die Teile durch thermisches Schrumpfen kraftschlüssig miteinander verbunden sind. Zur Verbindung einer Kurbelwelle mit den Kolben werden durchweg geteilte Pleuel verwendet, die gleichfalls verhältnismäßig aufwendig in der Herstellung sind und besondere Aufmerksamkeit bei der Montage erfordern, um einen einwandfreien Rundlauf der Zapfen zu gewährleisten ; dies besonders, wenn statt der vielfach verwendeten Gleitlager an dieser Stelle Wälzlager eingesetzt werden sollen. Das Befestigen von Rohren in Bohrungen anderer Teile durch Aufweiten ersterer ist durch die DE-AS 26 16 523 aus dem Wärmetauscherbau bekannt, wobei sowohl hydraulische Aufweitvorrichtungen Verwendung finden. Aufgabe der vorliegenden Erfindung ist ein kostengünstiges Verfahren zur Herstellung von gebauten Kurbelwellen, bei denen für die einzelnen Teile Werkstoffe gewählt werden können, die den zu erwartenden unterschiedlichen, spezifischen Belastungen besonders angepaßt sind. Die Einzelteile sollen dabei vor dem Fügen fertig bearbeitet sein, so daß bis auf ein Richten und Feinwuchten keine Nachbearbeitung erforderlich ist. Die mittels des erfindungsgemäßen Verfahrens hergestellten Kurbelwellen sollen mit einfacher anzubringenden Schmierkanälen versehen sein und ggf. auch gute Notlaufeigenschaften aufweisen. Durch den mit der Herstellung gleichzeitig einhergehenden Anbau von Elementen wie Lagern und Pleueln sollen diese zugleich vereinfacht und in ihren Laufeigenschaften verbessert werden.

Der vorliegenden Erfindung liegt weiterhin die Aufgabe zugrunde, eine gebaute Kurbelwelle bereitzustellen, die in günstiger Weise an das genannte Herstellungsverfahren angepaßt ist und Verbindungen hoher Festigkeit bei geringem Gewicht aufweisen kann.

Die Lösung dieser Aufgabe erfolgt dadurch, daß die Zapfen unter plastischer Verformung in situ aufgeweitet und in den entsprechenden Bohrungen der Kurbelwangen gegen eine bleibende elastische Vorspannung in denselben zur Anlage gebracht werden. Durch die vorwiegend elastische Verformung der Wangen federn diese nach beendetem Aufweitvorgang auf die Zapfen zurück, wodurch eine Verbindung geschaffen wird, die auch den hohen zu übertragenden Momenten standhält.

Der Aufweitvorgang verlangt die Wahl verhältnismäßig duktiler Werkstoffe für die Zapfen. Diese können in herkömmlicher Weise einer anschließenden Oberflächenhärtung unterzogen werden, doch erscheint ein Aufziehen von separaten Lagerbuchsen vorteilhafter. Für die Lagerbuchsen kann dann ein im Hinblick auf seine Lagereigenschaften, z.B. seine Härte optimierter Werkstoff gewählt werden.

Der Aufweitvorgang der Zapfen kann so durchgeführt werden, daß die Lagerbuchsen zwar in ihrer Lage fixiert, doch keinen oder nur geringen elastischen Verformungen unterzogen werden.

Bei der Verwendung von Lagerbuchsen können die Zapfen auch über ihre gesamte Länge aufgeweitet und die Lagerbuchsen dabei ebenfalls elastisch verformt werden. Es wird ein besonders inniger Verbund zwischen Lagerbuchsen und Zapfen erreicht.

In einer Weiterbildung des Verfahrens wird durch das Einpressen der Lagerbuchsen in die dafür vorgesehenen Bohrungen der Wangen eine vorläufige, als Montagehilfe dienende Verbindung geschaffen, die durch das anschliessende Aufweiten des Zapfens abgelöst wird.

Diese Verfahrensart eignet sich weniger für Lagerbuchsen aus verhältnismäßig hartem und sprödem Werkstoff, da dessen Oberfläche bei elastischer Aufweitung zur Rißbildung neigt. Hierfür bietet sich die Variante an, nach der nur diejenigen Teile der Lagerbuchsen mit aufgeweitet werden, die in die Bohrungen der Wangen hineinragen und deren Oberfläche somit nicht als Lagerfläche benötigt wird. Diese Fläche könnte z.B. bei der vorhergehenden Härtung der Lagerbuchsen ausgespart werden. Die Verwendung von mit Bunden versehenen Lagerbuchsen schafft sowohl einen Anschlag beim Einführen in die Bohrungen der Wangen und versteift sie darüber hinaus so, daß die Auswirkungen der elastischen Verformung an den Enden sich nicht dem mittleren, als Lager genutzten Teil mitteilen.

Entsprechend einer weiteren Ausgestaltung können bereits vor dem Fügen ungeteilte Wälzlager auf die Zapfen aufgebracht werden. Da das Fügen ohne Wärmeeinwirkung und ohne die auch bei fortschrittlichen Schweißverfahren nicht ganz zu beseitigende Gefahr des Auswerfes von Material aus der Schweißstelle abläuft, werden die Lager hierbei nicht gefährdet.

Weiterhin können gleichzeitig mit den oben vorgeschlagenen Wälzlagern auch ungeteilte Pleuel auf die Zapfen aufgeschoben werden. Da die nach dem erfindungsgemäßen Verfahren hergestellten Kurbelwellen soweit verbessert sind, daß ihre Lebensdauer nicht mehr der begrenzende Faktor für die Dauerhaftigkeit der ganzen Maschine darstellt, kann auf die leichte Reparierbarkeit der Pleuel und der Lager verzichtet werden.

Die Auswahl von Sinterwerkstoff für die Lagerbuchsen gewährleistet bei Verwendung von Gleitlagern eine gleichmäßige, gut dosierbare Schmierung der Lagerflächen. Das Sintermaterial bietet darüber hinaus die Möglichkeit, gewisse Mengen an einem Festschmierstoff zu speichern, der bei Ausfall der eigentlichen Ölversorgung den Lagern gewisse Notlaufeigenschaften vermittelt.

Nach einer weiteren Ausgestaltung kann zwischen den zu fügenden Flächen der Zapfen und Wangen eine Dichtstoffschicht vorgesehen sein, um die zweckmäßigerweise als durchgehende Nuten ausgeführten Schmierölkanäle nach den Enden abzudichten. In weiterer Ausgestaltung wird eine Dichtschicht aus Weichmetall, z.B. Kupfer verwendet.

Eine erfindungsgemäße Kurbelwelle zeichnet sich dadurch aus, daß an den Wellenzapfen gerade, außen glatte Rohrabschnitte als Verbindungsbereiche ausgebildet sind, die in gerade, achsparallele oder achsgleiche Durchgangsbohrungen in den Kurbelwangen eingesetzt und mittels plastischer Aufweitung der Rohrabschnitte unter bleibender elastischer Vorspannung in den Durchgangsöffnungen festgelegt sind. Kurbelwellen dieser Art lassen sich in vereinfachter Bauweise so herstellen, daß nur die Kurbelwangen als Schmiede- oder Stanzteile erzeugt werden, während alle übrigen Komponenten aus Normteilen, nämlich Stangen- oder Rohrmaterial gefertigt werden können. Das hydraulische Verbinden erfolgt nach an sich bekannten Verfahren, indem jeweils die Verbindungsbereiche der Rohrkörper in die entsprechenden Durchgangsbohrungen in den Kurbelwangen eingesteckt werden und anschließend mittels einer eingeführten Druckmittelsonde unter radialer plastischer Verformung aufgeweitet werden, wobei die Verformung der Kurbelwange im Umgebungsbereich elastisch bleibt und auch nach dem Zurücknehmen des hydraulischen Druckes eine Vorspannung zwischen den Teilen erhalten bleibt, die geeignet ist, die erforderlichen Drehmomente zu übertragen. Die auftretenden Biegemomente können dadurch günstig abgestützt werden, daß im Anschluß an die Verbindungsbereiche jeweils Querschnittsänderungen der Wellenzapfen vorgesehen sind, wodurch sich die Stirnflanken an den Kurbelwangen abstützen können.

In einer günstigen Ausführung können jeweils vollständige einstückige Kröpfungen mit einem Kurbel- oder Hubzapfen und zwei anschließenden Wangen einstückig erzeugt werden, wobei ausschließlich die Grundzapfen als Norm- oder Drehteile in entsprechende Öffnungen eingesetzt und hydraulisch festgelegt werden. Der Vorteil hierbei ist, daß der Durchmesser des aufzuweitenden Verbindungsbereiches relativ groß gewählt werden kann und daß alle Verbindungsstellen koaxial zueinander liegen, was den Herstellvorgang wesentlich vereinfachen kann, da beispielsweise mit einer einzigen durchgehenden Sonde mit mehreren Aufweitabschnitten alle Verbindungen gleichzeitig erzeugt werden können. Ein Vorteil hierbei ist, daß mit einer einzigen Standardkröpfung verschiedene Kurbelwellentypen hinsichtlich der Kröpfungszahl und -lage, d.h. z.B. Kurbelwellen für einen Drei- und einen Vierzylinder gleicher Baureihe erzeugt werden können.

Nach einer günstigen Ausbildung sind die Wellenzapfen einstückig ausgeführt, wobei Absätze im Außendurchmesser an den Enden die Verbindungsbereiche erzeugen. Nach einer Abwandlung können die Wellenzapfen auch aus einem durchgehenden Rohrabschnitt und einer durchmessergrößeren aufgeschobenen Hülse hergestellt sein, wobei die Verbindung zwischen Rohrkörper und Hülse ebenfalls mittels hydraulischer Aufweitung wie die Verbindung zwischen den Verbindungsbereichen und den Kurbelwangen hergestellt sein kann. Der Vorteil hierbei ist, daß die Verwendung von Normteilen noch weiter geführt wird und das Überdrehen der Endbereiche entfällt, wobei in besonders günstiger Weise die Verbindung zwischen Rohrabschnitt und Hülse gleichzeitig mit der zwischen Verbindungsbereich und Kurbelwange vollzogen werden kann, wozu nur die Verwendung von Druckmittelsonden mit längeren Aufweitbereichen erforderlich ist.

Eine günstige Einzelheit ist darin zu sehen, daß an den Stirnflächen der im Durchmesser größeren Lagerbereiche der Wellenzapfen am Übergang zu den Verbindungsbereichen Einstiche vorgesehen sind, in die das elastisch verformte Material der Kurbelwangen nach dem Umformen eintreten kann.

Nach einer anderen günstigen Ausführungsform können sowohl die Hubzapfen als auch die Kurbelzapfen in der beschriebenen Weise in die Kurbelwangen eingesetzt und mit diesen verbunden sein. In einfacher Ausgestaltung, die die Verwendung von Normteilen zuläßt, ist hierbei der Kurbelzapfen als glatter Rohrabschnitt ausgebildet. Zur Erhöhung der Biegefestigkeit und um die gewünschte Überdeckung von Hubzapfen und Grundzapfen bei kurzhubigen Motoren zu erlangen, kann der verwendete Kurbelzapfen einen exzentrisch zu den Verbindungsbereichen angeordneten Mittelabschnitt vergrößerten Durchmessers aufweisen, wobei allerdings eine mechanische Bearbeitung in größerem Umfang erforderlich wird.

In bestimmten Anwendungsfällen kann es günstig sein, ausschließlich in die Kurbelwangen eingesetzte und durch hydraulisches Umformen gefügte Kurbelzapfen zu verwenden wenn die Kurbelwangen scheibenförmig ausgebildet werden, um unmittelbar als Lager zu wirken wie an sich bekannt, so daß ein einfaches Drehteil zwei Kurbelwangen und einen Grundzapfenabschnitt ersetzt kann. Hiermit ist der Übergang zu einer Scheibenkurbelwelle vollzogen, wobei Scheibenkörper, an denen jeweils entgegengesetzt zwei Kurbelzapfen ansetzen, zugleich als Lagersitz oder Lagerfläche für ein Wälz- oder Gleitlager dienen.

Besonders günstig im Hinblick auf die Abwandelbarkeit der gesamten Konstruktion ist es selbstverständlich, wenn sowohl die Kurbelzapfen als auch die Grundzapfen unter Herstellen einer Fügeverbindung der genannten Art in die Kurbelwangen eingesetzt sind.

Eine besondere Problematik besteht bei Wellen der genannten Art in der Herstellung einer Schmierölversorgung der Pleullagerzapfen von den Grundlagerzapfen aus, da in der Regel zumindest einer der Zapfen rohrförmig ausgebildet ist. Zur Lösung dieses Problems geht ein Vorschlag dahin, Hülsen oder Zapfen geringeren Durchmessers mit Dichtungsbereichen an den Enden in die Durchgangsbohrungen der Lagerzapfen einzusetzen, so daß ringzylindrische Ölverbindungsräume innerhalb der Zapfen entstehen. Zur Gewichtsersparnis können die eingesetzten Hülsen oder Zapfen aus leichtem Werkstoff wie Kunststoff oder Leichtmetall sein.

Ein bevorzugtes Herstellungsverfahren besteht darin, die Kurbelwellen von einem Ende zum anderen hin stufenweise aufzubauen, insbesondere wenn auch die Kurbelzapfen eingesetzt und gefügt sind, da dann jeweils von einer Seite freie Zugängigkeit für das Einführen einer geraden Druckmittelsonde gewahrt ist. Es können jedoch auch Druckmittelsonden mit abgewinkeltem Aufweitbereich verwendet werden. Werden nur die Grundzapfen eingesetzt und gefügt, so ist, wie bereits erwähnt, die Herstellung aller Verbindungen im einem Arbeitsgang möglich.

Einen wesentlichen Vorteil bietet eine erfindungsgemäße Kurbelwelle in der Herstellung dadurch, daß ungeteilte Lagerschalen und/oder Pleuelaugen bzw. vormontierte Pleuel auf die Hubzapfen vor dem Fügen aufgeschoben werden können. Solche Pleuel mit ungeteilten Pleuelauge haben festigkeitsmäßig und gewichtsmäßig wesentliche Vorteile. Eine Reparatur bei Lagerschäden wird Hierdurch nicht unmöglich, da die Lagerzapfen axial ausgepreßt und mit den Lagerschalen ausgetauscht werden können, wobei aufgrund der rein elastischen Verformung des Kurbelwangenmaterials anschließend eine Verbindung mit neuen Lagerzapfen ohne weiteres wieder hergestellt werden kann.

Weitere Einzelheiten der Erfindung lassen sich der nachstehenden Beschreibung der in den Figuren dargestellter bevorzugter Ausführungsbeispiele entnehmen.

Fig. 1 zeigt eine erfindungsgemäße Kurbelwelle mit kleinem Hub in einer ersten Ausgestaltung mit einer vergrößerten Einzelheit,

Fig. 2 zeigt eine erfindungsgemäße Kurbelwelle mit kleinem Hub in einer zweiten Ausführung und ein abgewandeltes Einzelteil,

Fig. 3 zeigt einen Abschnitt einer erfindungsgemäßen Kurbelwelle mit großem Hub in einer ersten Ausgestaltung mit einer vergrößerten Einzelheit,

Fig. 4 zeigt einen Abschnitt einer erfindungsgemäßen Kurbelwelle mit großem Hub in einer zweiten Ausgestaltung.

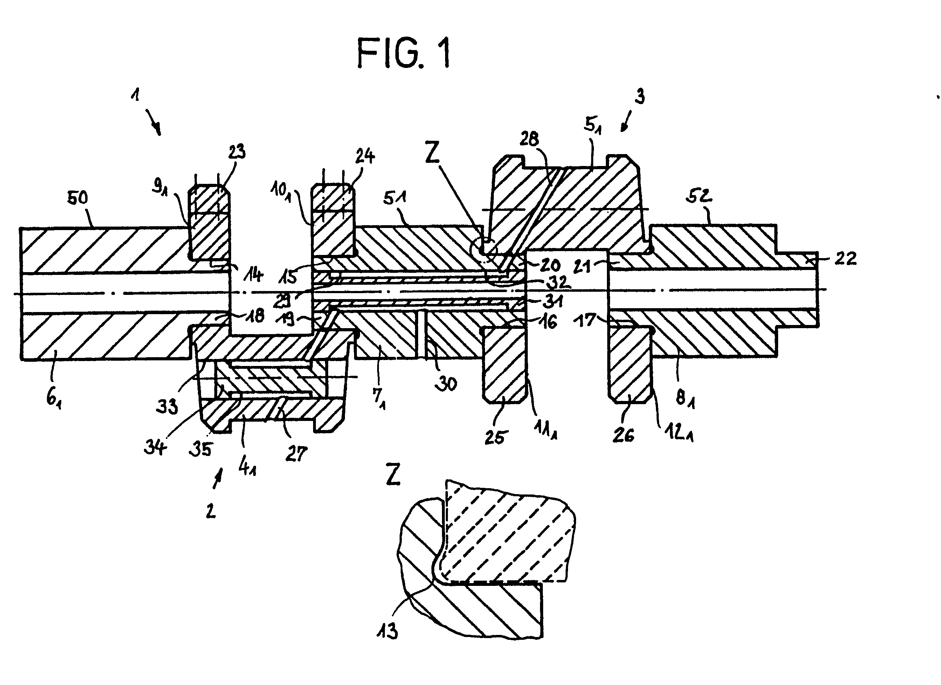

In Fig. 1 ist eine Kurbelwelle 1 mit zwei entgegengesetzt angeordneten Kröpfungen 2, 3 dargestellt, die zwei Kurbel oder Pleuellagerzapfen $4_1$, $5_1$ und drei Grundlagerzapfen $6_1$, $7_1$, $8_1$ aufweist. Die Verbindung zwischen den Zapfen wird jeweils durch Kurbelwangen $9_1$, $10_1$, $11_1$, $12_1$ dargestellt. Die, Grundlagerzapfen bilden die Lagerabschnitte 50, 51, 52. Bei einer kurzen Kurbelwelle der dargestellten Art braucht im übrigen der Grundzapfen $7_1$ nicht notwendigerweise als Lagerstelle ausgebildet zu sein, wie auch bei längeren Kurbelwellen die Möglichkeit besteht, beispielsweise nur jeden zweiten Grundzapfen als Lagerstelle auszulegen. An den Durchmesserverhältnissen braucht sich hierbei im übrigen nichts zu ändern. In der dargestellten Ausführung sind jeweils zwei Kurbelwangen $9_1$, $10_1$, $11_1$, $12_1$ einstückig mit dem dazwischen liegenden Kurbelzapfen ausgebildet, wobei vorzugsweise eine Herstellung als Schmiedeteil erfolgen kann. Der Kurbelzapfen $4_1$ ist zur Gewichtsreduzierung mit einer auch die Kurbelwangen durchsetzenden Durchgangsbohrung 13 versehen, während der Kurbelzapfen $5_1$ massiv ausgebildet ist. Jede der Kurbelwangen weist eine koaxiale Durchgangsöffnung 14, 15, 16, 17 auf, in die die Verbindungsabschnitte 18 ; 19, 20 und 21 der Grundzapfen $6_1$, $7_1$ und $8_1$ eingesetzt sind. Der Grundzapfen $6_1$ weist nur den einen Verbindungsabschnitt 18 auf und ist z.B. zur Verbindung mit einem Schwungsrad oder Drehschwingungsdämpfer hinter dem Lagerabschnitt 50 vorgesehen, während die Grundzapfen $7_1$ und $8_1$ jeweils zwei Verbindungsabschnitte 19, 20 ; 21, 22 aufweisen, von denen der letztgenannte z.B die Anschlußmöglichkeit für eine weitere Kurbelwange darstellt. Die Kurbelwangen $9_1$ und $10_1$ sind jeweils mit angeschraubten Gegengewichten 23, 24 versehen, während an den Kurbelwangen $11_1$ und $12_1$ angegossene oder angeschmiedete Gegengewichte 25, 26 zu erkennen sind. Die Kurbelzapfen $4_1$, $5_1$ sind jeweils von schräg geführten Ölversorgungsbohrungen 27, 28 durchsetzt, die an der Gleitfläche des Lagers austreten und mit der Durchgangsbohrung 29 im mittleren Grundzapfen $7_1$ in Verbindung stehen. Von dieser Durchgangsbohrung geht eine radiale Ölversorgungsbohrung 30 aus, die an der Zapfengleitfläche 51 austritt. In die Durchgangsbohrung 29 ist eine im Durchmesser kleinere und an den Enden abdichtende Hülse 31 eingesetzt, um einen ringzylindrischen Schmierölraum 32 auszubilden. In die Durchgangsbohrung 33 des Pleuelzapfens $4_1$ ist ein im Durchmesser kleinerer, an den Enden abgedichteter Zapfen 34 eingesetzt, um einen ringzylindrischen Schmierölraum 35 auszubilden. Der Zapfen 34 bzw. die Hülse 31 sind vorzugsweise aus leichten Werkstoffen wie Leichtmetall oder Kunststoff gefertigt und können eingepreßt oder eingelötet sein. Bei den massiven Kurbelzapfen $5_1$ kann die Ölversorgungsbohrung 28 bis zur Lagergleitfläche durchgehen. Als Einzelheit Z ist ein Einstich 36 in der Stirnfläche des Lagerabschnitts des Grundzapfens $7_1$ am Übergang zum Verbindungsbereich erkennbar, um eine Kerbwirkung beim Aufweiten des Verbindungsabschnittes zu vermeiden.

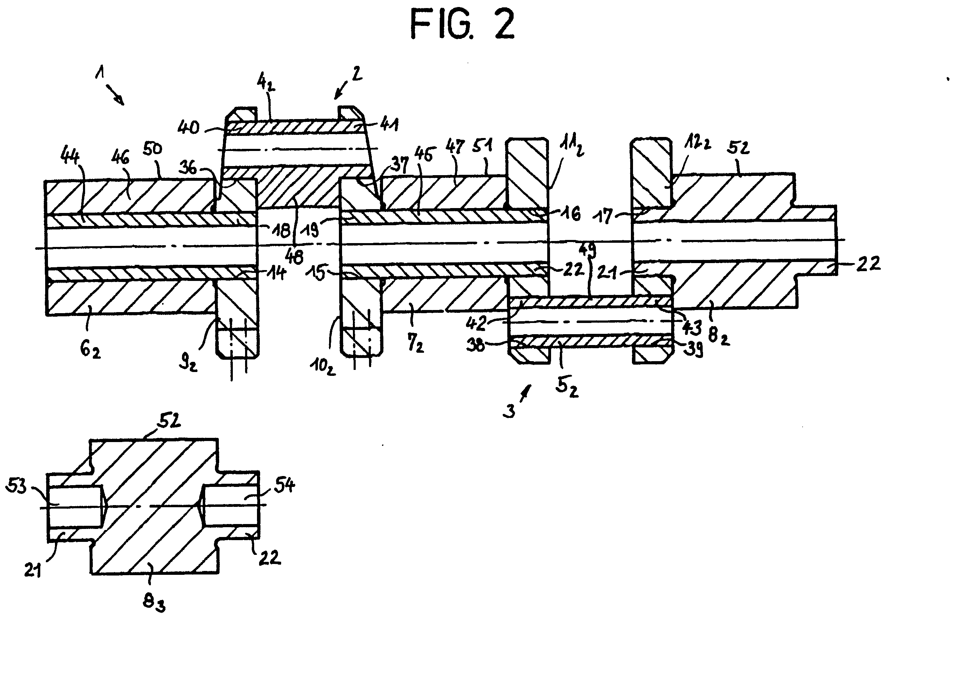

In Fig. 2 ist einer weiteren Ausführung eine Kurbelwelle 1 mit zwei Kröpfungen 2, 3 dargestellt, wobei sowohl die Kurbelzapfen $4_2$, $5_2$ als auch die Grundzapfen $6_2$, $7_2$, $8_2$ mit den Kurbelwangen $9_2$, $10_2$, $11_2$, $12_2$ durch Fügen verbunden sind. Hierbei weisen die Kurbelwangen sowohl Durchgangsbohrungen 14, 15, 16, 17 zur Aufnahme der Verbindungsabschnitte 18, 19, 20, 21 der Grundzapfen auf, als auch Durchgangsbohrungen 36, 37 ; 38, 39 zur Aufnahme der Verbindungsabschnitte 40, 41 ; 42, 43 der Kurbelzapfen $4_2$, $5_2$. Der Grundzapfen $8_2$ ist völlig gleichartig mit dem Grundzapfen $8_1$ nach Fig. 1 und weist ebenfalls einen zweiten Verbindungsabschnitt 22 auf, während die Grundzapfen $6_2$, $7_2$ jeweils aus einem durchgehenden Rohrstück 44, 45 und darauf aufgeschobenen Hülsen 46, 47 bestehen, die insbesondere mittels hydraulischer Aufweitung miteinander verbunden sein können.

Ein gleichartiger Aufbau ist grundsätzlich auch für die Kurbelzapfen $4_2$, $5_2$ möglich, die jedoch in der dargestellten Ausführung als glatter Rohrabschnitt 49, der auch den Lagerbereich umfaßt (Kurbelzapfen $5_2$) bzw. mit einem nach innen versetzten Exzenter 48, der zwischen den Anschlußbereichen 40 und 41 liegt (Kurbelzapfen 4), ausgebildet sind. An den Kurbelwangen sind auch hier angeschraubte Gegengewichte 23, 24 bzw. angegossene Gegengewichte 25, 26 erkennbar. Bohrungen und Kanalsystem zur Schmierölversorgung sind hier nicht dargestellt.

Als abgewandeltes Einzelteil ist ein Grundzapfen $8_3$ dargestellt, der aus Vollmaterial besteht und bei dem nur die Verbindungsbereiche 21, 22 mit Sacklöchern 53, 54 versehen sind.

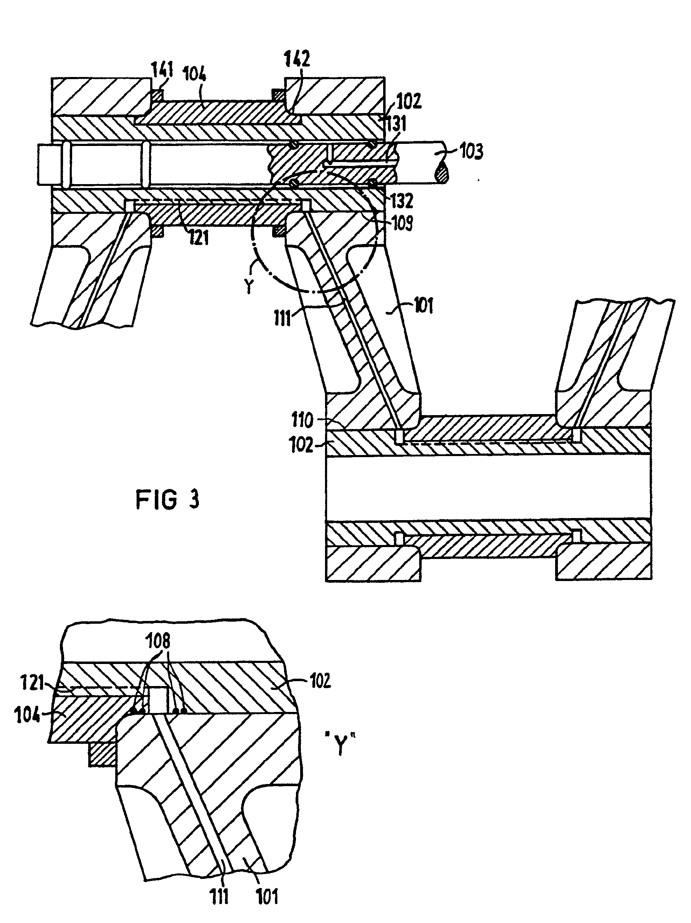

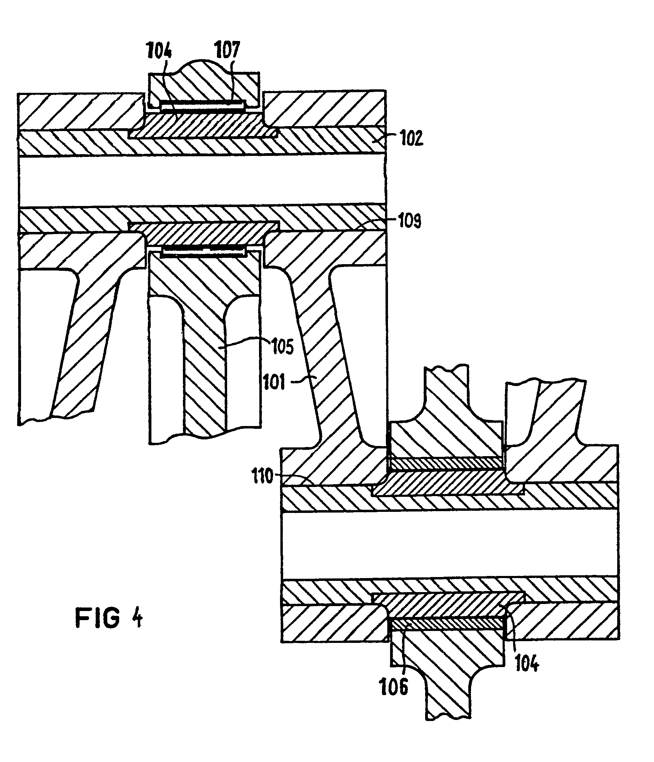

Nach den Figuren 3 und 4 besteht die Kurbelwelle aus einer Anzahl von Wangen 101, die in bezug auf ihre konstruktive Ausgestaltung und den Werkstoff so optimiert werden, daß das günstigste Verhältnis von Gewicht zu Biegesteifigkeit erreicht wird. Die Wangen 101 sind mit Bohrungen 109, 110 versehen, in die Lagerzapfen 102 aus einem besonders duktilen Material mit geringem Spiel hineingesteckt werden. Anschließend werden sie mit Hilfe einer teils aufgebrochen gezeichneten Sonde 103 aufgeweitet, die über einen Kanal 131 mit Druckfluid versorgt wird, das in durch Dichtungen 132 abgegrenzte Aufweitbereiche austritt und die Lagerzapfen 102 plastisch verformt, die angrenzenden Teile der Wangen 101 jedoch nur elastisch. Vor dem Fügen sind auf die Lagerzapfen 102 Lagerbuchsen 104 aus einem hierfür besonders geeigneten, z.B. gehärteten Werkstoff aufgebracht worden. Die Lagerbuchsen 104 können aus einem porösen Sintermaterial hergestellt sein, das mit Festschmierstoff getränkt sein kann. In jedem Falle erfolgt eine ausreichende Schmierstoffversorgung über Bohrungen 111 in den Wangen 101, die vor dem Zusammenbau ohne Schwierigkeiten einzubringen sind, und über Schmierkanäle 121 in den Lagerzapfen 102, die hier der Einfachheit halber die Form von eingefrästen Nuten haben können. Ebenfalls vor dem Zusammenfügen sind auf die Lagerzapfen 102 ungeteilte Pleuelstangen 105 aufgeschoben worden. Die die Vermittlung der Bewegung zwischen den beiden Teilen übernehmenden Lager können als Gleitlager 106 oder Wälzlager 107 ausgeführt sein, die beide ebenfalls vor dem Zusammenfügen der Wangen 101 und Lagerzapfen 102 auf letztere aufgebracht wurden. Als Montagehilfe vor dem Aufweiten können die gegebenenfalls dünner gehaltenen Enden der Lagerbuchse 104 ebenfalls in die Bohrungen der Wangen 101 mit Preßsitz eingeführt worden sein. Damit die durch ds Aufweiten der Zapfen hervorgerufene elastische Verformung der Lagerbuchsen 104 nur auf das verjüngte Teil 142 beschränkt bleibt, können auch noch Verstärkungen in Form von Bunden 141 vorgesehen sein. Zwischen die Wangen 101 und die Zapfen 102 kann eine Dichtschicht 108, z.B. aus Kupfer, Gummi oder Kunststoff gelegt werden, die diese Verbindung gegenüber den Schmierkanälen 111, 121 abdichtet.

## Bezugszeichenliste

| | | |
|---|---|---|
| 1 | | Kurbelwelle |
| 2, 3 | | Kröpfung |
| 4, 5 | | Kurbel-, Hubzapfen, Pleuellagerzapfen |
| 6, 7, 8 | | Grundzapfen, Hauptlagerzapfen |
| 9, 10, 11, 12 | | Kurbelwange |
| 13 | | Durchgangsbohrung (Kurbelzapfen) |
| 14, 15, 16, 17 | | Durchgangsbohrung (Grundzapfen) |
| 18, 19, 20, 21, 22 | | Verbindungsabschnitt (Grundzapfen) |
| 23, 24, 25, 26 | | Gegengewicht |
| 27, 28 | | Ölversorgungsbohrung |
| 29 | | Durchgangsbohrung (Grundzapfen) |
| 30 | | Ölversorgungsbohrung |
| 31 | | Hülsenkörper |
| 32 | | Schmierölraum |
| 33 | | Durchgangsbohrung (Kurbelzapfen) |
| 34 | | Zapfenkörper |
| 35 | | Schmierölraum |
| 36, 37, 38, 39 | | Durchgangsbohrung (Kurbelwange) |
| 40, 41, 42, 43 | | Verbindungsabschnitt (Kurbelzapfen) |
| 44, 45 | | Rohrkörper (Grundzapfen) |
| 46, 47 | | Hülsenkörper (Grundzapfen) |
| 48 | | Exzenter |
| 49 | | Rohrabschnitt |
| 50, 51, 52 | | Lagerabschnitt |
| 53, 54 | | Sackloch |

| 101 | Kurbelwange |
| 102 | Rohrkörper (Grundzapfen) |
| 103 | Druckmittelsonde |
| 104 | Lagerhülse (Grundzapfen) |
| 105 | Pleuel |
| 106 | Gleitlager |
| 107 | Wälzlager |
| 108 | Dichtung |
| 109 | Bohrung (Kurbelwange) |
| 110 | Bohrung (Kurbelwange) |
| 111 | Schmierölbohrung |
| 112 | Rohrkörper (Kurbelzapfen) |
| 114 | Lagerhülse (Kurbelzapfen) |
| 131 | Druckmittelkanal |
| 132 | Dichtung |
| 141 | Bund (Lagerhülse) |
| 142 | Eindrehung |

**Ansprüche**

1. Verfahren zur Herstellung von Kurbelwellen aus einzeln hergestellten und anschließend gefügten Kurbelwangen (9-12 ; 101) und Wellenzapfen (4-8 ; 102, 112), wobei die Kurbelwangen mit Bohrungen (13-17, 109, 110) versehen sind, und die Wellenzapfen als Hohlkörper ausgeführt sind, dadurch gekennzeichnet,

daß zumindest ein Teil der Zapfen (4-8 ; 102) unter plastischer Verformung in situ aufgeweitet und in den entsprechenden Bohrungen (13-17 ; 109, 110) der Kurbelwangen (9-12 ; 101) gegen eine bleibende elastische Vorspannung in denselben zur Anlage gebracht werden.

2. Verfahren nach Anspruch 1, dadurch gekennzeichnet,
daß auf die Zapfen (4-8 ; 102) vor dem Verbinden der Zapfen mit den Kurbelwangen (9-12 ; 101) hohlzylindrische Lagerbuchsen (46, 47 ; 104) aufgebracht werden.

3. Verfahren nach einem der Ansprüche 1 oder 2, dadurch gekennzeichnet,
daß beim Herstellen der Verbindung zwischen Lagerzapfen (4-8) und Kurbelwangen (9-12) zugleich eine Kraftschlüssige Verbindung zwischen dem Lagerzapfen und einer einen Lagerabschnitt (50, 51) bildenden aufgeschobenen Lagerbuchse (46, 47) erzeugt wird.

4. Verfahren nach einem der Ansprüche 1 oder 2 dadurch gekennzeichnet,
daß beim Herstellen der Verbindung zwischen Lagerzapfen (102) und Kurbelwangen (101) nur Teile der Lagerbuchsen (104) mit den Zapfen (102) verformt werden, die außerhalb des Lagerabschnitts liegen.

5. Verfahren nach einem der Ansprüche 1 bis 4, dadurch gekennzeichnet,
daß die Lagerbuchsen (104) mit Preßsitz in die Bohrungen (109, 110) der Wangen (101) eingeführt werden.

6. Verfahren nach einem der Ansprüche 1 bis 5, dadurch gekennzeichnet,
daß die Lagerbuchsen (104) für die Dauer des Fügens von Wangen (101) und Zapfen (102) unterkühlt werden.

7. Verfahren nach einem der Ansprüche 1 bis 6, dadurch gekennzeichnet,
daß vor dem Herstellen der Verbindung der Grundzapfen oder Kurbelzapfen mit den Kurbelwangen (101) ungeteilte Gleit- oder Wälzlager (106, 107) auf die Zapfen (102) aufgebracht werden.

8. Verfahren nach einem der Ansprüche 1 bis 7, dadurch gekennzeichnet,
daß vor dem Herstellen der Verbindung zwischen Kurbelzapfen (102) und Kurbelwangen (101) vormontierte oder ungeteilte Pleuel (105) auf die Kurbelzapfen (102) aufgeschoben werden.

7

9. Verfahren nach einem der Ansprüche 1 bis 8, dadurch gekennzeichnet,
daß jeweils sämtliche zueinander koaxial liegenden Verbindungen zwischen Zapfen und Kurbelwangen gleichzeitig hergestellt werden.

10. Verfahren nach einem der Ansprüche 1 bis 8, dadurch gekennzeichnet,
daß die Verbindungen zwischen Zapfen und Kurbelwangen entlang der Kurbelwelle axial fortschreitend hergestellt werden.

11. Gebaute Kurbelwelle, bestehend zumindest aus Grundzapfen, Kurbelwangen und Kurbelzapfen, wobei zumindest an den Grundzapfen (6, 7, 8 ; 102) oder den Kurbelzapfen (4, 5 ; 102) gerade, außen glatte Rohrabschnitte als Verbindungsbereiche (18-22 ; 40-43) ausgebildet sind, die in gerade, achsparallele oder achsgleiche Durchgangsbohrungen (14-17, 36-39 ; 102, 110) in den Kurbelwangen (9, 10, 11, 12 ; 101) eingesetzt und mittels plastischer Aufweitung der Rohrabschnitte unter bleibender elasticher Vorspannung in den Durchgangsöffnungen (14-17, 36-39 ; 102, 110) festgelegt sind.

12. Kurbelwelle nach Anspruch 11, dadurch gekennzeichnet,
daß jeweils zwei Kurbelwangen (9, 10 ; 11, 12) mit einem diese verbindenden Zapfen (4, 5) einstückig ausgebildet sind.

13. Kurbelwelle nach Anspruch 12, dadurch gekennzeichnet,
daß der mit den Kurbelwangen (9, 10) einstückige Kurbelzapfen (4) eine konzentrische Bohrung (33) zur Gewichtsreduzierung hat.

14. Kurbelwelle nach Anspruch 11, dadurch gekennzeichnet,
daß Zapfen (5) vorgesehen sind, die aus durchgehenden glatten Rohrstücken gleichbleibenden Durchmessers bestehen.

15. Kurbelwelle nach Anspruch 11, dadurch gekennzeichnet,
baß Zapfen (8) vorgesehen sind, die in den Stirnflächen Sacklöcher (53, 54) zur Bildung der Verbindungsbereiche (21, 22) aufweisen.

16. Kurbelwelle nach Anspruch 11, dadurch gekennzeichnet,
daß Zapfen (6, 7, 8) vorgesehen sind, die einen mittleren Lagerabschnitt (50, 51, 52) größeren Durchmessers und daran anschließende Verbindungsbereiche (18 bis 22) kleineren Durchmessers aufweisen.

17. Kurbelwelle nach einem der Ansprüche 14 bis 16, dadurch gekennzeichnet,
daß die Zapfen (6, 7, 8) einstückig die Lagerabschnitte (50, 51, 52) und die Verbindungsbereiche (18 bis 22) umfassen.

18. Kurbelwelle nach einem der Ansprüche 14 bis 16, dadurch gekennzeichnet,
daß die Zapfen (6, 7, 8) aus mit einer Durchgangsbohrung versehenen Lagerhülsen (46, 47 ; 104) zur Bildung der Lagerabschnitte (50, 51) und jeweils darin eingesteckten, an den Enden überstehenden Rohrstücken (44, 45 ; 102) zur Bildung von Verbindungsbereichen (18, 19, 20) bestehen.

19. Kurbelwelle nach Anspruch 18, dadurch gekennzeichnet,
daß die Lagerhülse (46, 47) und das Rohrstück (44, 45) in der gesamten Durchgangsöffnung der Hülse (46, 47) mittels plastischer Aufweitung des Rohrstückes (44, 45) unter bleibender elastischer Vorspannung miteinander verbunden sind.

20. Kurbelwelle nach Anspruch 18, dadurch gekennzeichnet,
daß die Lagerhülse (104) und das Rohrstück (102) ausschließlich im Bereich der Kurbelwangen (101) mittels plastischer Aufweitung des Rohrstückes (102) unter bleibender elastischer Vorspannung miteinander verbunden sind.

21. Kurbelwelle nach einem der Ansprüche 14 bis 20, dadurch gekennzeichnet,
daß in der Stirnfläche eines Zapfens (6, 7, 8) am Übergang vom Lagerabschnitt (50, 51, 52) zu den Verbindungsbereichen (18-22) ein Einstich (13) vorgesehen ist.

22. Kurbelwelle nach einem der Ansprüche 14 bis 21, dadurch gekennzeichnet,
daß Zapfen (4) vorgesehen sind, deren Lagerabschnitt (48) gegenüber den Verbindungsbereichen (40, 41) exzentrisch versetzt ist.

23. Kurbelwelle nach einem der Ansprüche 14 bis 22, dadurch gekennzeichnet,
daß jeweils kreisscheibenförmige Kurbelwangen ausschließlich mit Hubzapfen zur Ausbildung einer Scheibenkurbelwelle verbunden sind.

24. Kurbelwelle nach einem der Ansprüche 11 bis 23, dadurch gekennzeichnet,
daß Ölversorgungsbohrungen (27, 28, 30 ; 111) von den Lagerbahnen der Grundlagerzapfen (7 ; 102) und der Pleuellagerzapfen (4, 5 ; 102) ausgehen, die über zumindest eine der inneren Zapfenbohrungen (29, 33) miteinander verbunden sind.

25. Kurbelwelle nach Anspruch 24, dadurch gekennzeichnet,
daß ein in eine innere Zapfenbohrung (29, 33) eingesetzter Zylinderkörper in Form einer Hülse (31) oder eines Zapfens (34) geringeren Durchmessers einen ringzylindrischen Schmierölraum (32, 35) bildet, der an beiden Enden abgedichtet ist.

26. Kurbelwelle nach einem der Ansprüche 11 bis 25, dadurch gekennzeichnet,

daß Wangen (101) und Zapfen (102) oder Lagerbuchsen (104) mit aufeinander abgestimmten Schlüsseleinbuchtungen bzw. -vorsprüngen versehen sind, die nur eine Orientierung der Teile zueinander zulassen.

27. Kurbelwelle nach Anspruch 11, dadurch gekennzeichnet,

daß Lagerbuchsen (104) verwendet werden, die außerhalb der Lagerflächen mit Bunden (141) und/oder Eindrehungen (142) versehen sind.

28. Kurbelwelle nach Anspruch 11, dadurch gekennzeichnet,

daß Lagerzapfen (102) verwendet werden, die außerhalb der Lagerflächen mit Eindrehungen (142) versehen sind.


## Claims

1. A method of manufacturing crankshafts from individually manufactured and subsequently joined crank webs (9-12 ; 101) and shaft journals (4-8 ; 102), with the crank webs being provided with bores (13-17; 109, 110) and with the shaft journals being designed as hollow members, characterised in that at least part of the journals (4-8 ; 102) are expanded in situ under plastic deformation and made to rest against the respective bores (13-17 ; 109, 110) of the crank webs (9-12 ; 101) against a permanent elastic pretension in same.

2. A method according to Claim 1, characterised in that prior to connecting the journals to the cranks webs hollow-cylindrical bearing bushes (46, 47 ; 104) are applied to the journals (4-8 ; 102).

3. A method according to one of Claims 1 or 2, characterised in that when producing the connection between the bearing journals (4-8) and crank webs (9-12), a force-locking connection is simultaneously produced between the bearing journal (6, 7) and a slid-on bearing bush (46, 47) forming a bearing portion (50, 51).

4. A method according to one of Claims 1 or 2, characterised in that when producing the connection between the bearing journals (102) and crank webs (101), only parts of the bearing bushes (104) which are positioned outside the bearing portion are deformed with the journals (102).

5. A method according to one of Claims 1 to 4, characterised in that the bearing bushes (104) are introduced into the bores (109, 110) of the webs (101) to form a press fit.

6. A method according to one of Claims 1 to 5, characterised in that the bearing bushes (104) are supercooled for the duration of the process of joining the webs (101) and journals (102).

7. A method according to one of Claims 1 to 6, characterised in that prior to producing the connection between the basic journals or crank journals (102) with the crank webs (101), undivided friction or roller bearings (106, 107) are applied to the journals (102).

8. A method according to one of Claims 1 to 7, characterised in that prior to producing the connection between the crank journals (102) and crank webs (101), pre-assembled or undivided connecting rods (105) are slid on to the crank journals (102).

9. A method according to one of Claims 1 to 8, characterised in that all connections between journals and crank webs positioned coaxially relative to each other are produced simultaneously.

10. A method according to one of Claims 1 to 8, characterised in that the connections between the journals and crank webs are produced so as to progress axially along the crankshaft.

11. An assembled crankshaft at least consisting of basic journals, crank webs and crank journals, with at least the basic journals (6, 7, 8 ; 102) or crank journals (4, 5 ; 102) being provided with straight, externally smooth tube portions to form connecting regions (18 to 22 ; 40 to 43) which are inserted into straight, axis-parallel or equi-axial through-bores (14 to 17, 36 to 39 ; 102, 110) in the crank webs (9, 10, 11, 12 ; 101) and which are fixed through plastic expansion or the tube portions under permanent elastic pretension in the trough-apertures (14 to 17, 36 to 39 ; 102, 110).

12. A crankshaft according to Claim 11, characterised in that in each case two crank webs (9, 10 ; 11, 12) are designed to be integral with a journal (4, 5) connecting these.

13. A crankshaft according to Claim 12, characterised in that the crank journal (4) designed to be integral with the crank webs (9, 10) has been provided with a concentric bore (33) for weight reducing purposes.

14. A crankshaft according to Claim 11, characterised in that there have been provided journals (5) which consist of continuous, smooth tubular pieces of a uniform diameter.

15. A crankshaft according to Claim 11, characterised in that there have been provided journals (8) whose end faces comprise blind holes (53, 54) for forming the connecting regions (21, 22).

16. A crankshaft according to Claim 11, characterised in that there have been provided journals (6, 7,

9

8) comprising a central bearing portion (50, 51, 52) with a larger diameter and adjoining connecting regions (18 to 22) with a smaller diameter.

17. A crankshaft according to one of Claims 14 to 16, characterised in that the journals (6, 7, 8), in one piece, embrace the bearing portions (50, 51, 52) and the connecting regions (18 to 22).

18. A crankshaft according to one of Claims 14 to 16, characterised in that the journals (6, 7, 8) consist of bearing sleeves (46, 47 ; 104) provided with a through-bore for forming the bearing portions (50, 51) and of tubular pieces (44, 45 ; 102) inserted into these and projecting at their ends for forming the connecting regions (18, 19, 20).

19. A crankshaft according to Claim 18, characterised in that the bearing sleeve (46, 47) and the tubular piece (44, 45) are connected to each other in the entire through-apertures of the sleeve (46, 47) through plastic expansion of the tubular piece (44, 45) under permanent elastic pretension.

20. A crankshaft according to Claim 18, characterised in that the bearing sleeve (104) and the tubular piece (102) are connected to each other exclusively in the region of the crank webs (101) through plastic expansion of the tubular piece (102) under permanent elastic pretension.

21. A crankshaft according to one of Claims 14 to 20, characterised in that the face of the journal (6, 7, 8), at the transition from the bearing portion (50, 51, 52) to the connecting regions (18 to 22), has been provided with a recess (13).

22. A crankshaft according to one of Claims 14 to 21, characterised in that there have been provided journals (4) whose bearing portion (48) is eccentrically offset relative to the connecting regions (40, 41).

23. A crankshaft according to one of Claims 14 to 22, characterised in that circular-disc-shaped crank webs are connected exclusively to crank pins for forming a disc crankshaft.

24. A crankshaft according to one of Claims 11 to 23, characterised in that oil supply bores (27, 28, 30; 111) start from the bearing tracks of the basic bearing journals (7 ; 102) and of the connecting rod bearing journals (4, 5 ; 102) which are connected to each other via at least one of the inner journal bores (29, 33).

25. A crankshaft according to Claim 24, characterised in that a cylindrical member in the form of a sleeve (31) or pin (34) with a smaller diameter inserted into an inner journal bore (29, 33) forms an annular-cylindrical lubricating oil space (32, 35) which is sealed at both ends.

26. A crankshaft according to one of Claims 11 to 25, characterised in that webs (101) and journals (102) or bearing bushes (104) are provided with key indentations and key projections respectively which are adapted to each other and which permit only one orientation of the parts relative to each other.

27. A crankshaft according to Claim 11, characterised in that bearing busches (104) are used which, outside the bearing faces, are provided with collars (141) and/or recesses (142).

28. A crankshaft according to Claim 11, characterised in that bearing journals (102) are used which, outside the bearing faces, are provided with recesses (142).

## Revendications

1. Procédé de fabrication de vilebrequins à partir de joues de manivelle (9-12 ; 101) et de tourillons d'arbre (4-8 ; 102) fabriqués séparément puis assemblés, les joues de manivelle étant munies d'alésages (13-17 ; 109, 110) et les tourillons d'arbre étant sous forme de corps creux, caractérisé en ce qu'au moins une partie des tourillons (4-8 ; 102) est élargie in situ sous déformation plastique et est amenée à reposer dans les alésages (13-17 ; 109, 110) correspondants des joues de manivelle (9-12 ; 101) à l'encontre d'une précontrainte élastique permanente.

2. Procédé selon la revendication 1, caractérisé en ce que des coussinets de palier (46, 47 ; 104) cylindriques creux sont appliqués sur les tourillons (4-8 ; 102) avant la liaison des tourillons avec les joues de manivelle (9-12 ; 101).

3. Procédé selon l'une des revendications 1 ou 2, caractérisé en ce que, lors de la fabrication de la liaison entre les tourillons (4-8) et les joues de manivelle (9-12), il se produit en même temps une liaison par assemblage par force entre le tourillon (6, 7) et un coussinet (46, 47) enfilé qui forme une section de palier (50, 51).

4. Procédé selon l'une des revendications 1 ou 2, caractérisé en ce que, lors de la formation de la liaison entre les tourillons (102) et les joues de manivelle (101), seules sont déformées avec les tourillons (102) les parties des coussinets (104) qui sont situées à l'extérieur de la section de palier.

5. Procédé selon l'une des revendications 1 à 4, caractérisé en ce que les coussinets (104) sont insérés dans les alésages (102, 110) des joues (101) à ajustement avec serrage.

6. Procédé selon l'une des revendications 1 à 5, caractérisé en ce que les coussinets (104) sont sous-refroidis pendant la durée de l'assemblage des joues (101) et des tourillons (102).

7. Procédé selon l'une des revendications 1 à 6, caractérisé en ce que, avant la formation de la liaison des tourillons (102) de base ou des manetons de vilebrequin avec les joues de manivelle (101), des paliers lisses (106) ou des paliers à roulement (107) sont appliqués sur les tourillons (102).

8. Procédé selon l'une des revendications 1 à 7, caractérisé en ce que, avant la formation de la liaison entre les manetons de vilebrequin (102) et les joues de manivelle (101), des bielles (105) prémontées ou non séparées sont enfilées sur les manetons de vilebrequin (102).

9. Procédé selon l'une des revendications 1 à 8, caractérisé en ce qu'à chaque fois toutes les liaisons coaxiales entre elles entre les tourillons et les joues de manivelle sont formées en même temps.

10. Procédé selon l'une des revendications 1 à 8, caractérisé en ce que les liaisons entre les tourillons et les joues de manivelle le long du vilebrequin sont formées progressivement suivant l'axe.

11. Vilebrequin assemblé qui consiste au moins en tourillons de base, en joues de manivelle et en manetons de vilebrequin, des sections de tube droites, extérieurement lisses en tant que domaines de liaison (18 à 22 ; 40 à 13) étant formées au moins sur les tourillons de base (6, 7, 8 ; 102) ou sur les manetons de vilebrequin (4, 5 ; 102), ces sections étant insérées dans des alésages traversants (14 à 17 ; 36 à 39 ; 102, 110) droits, à axes parallèles ou à axe identique dans les joues de manivelle (9, 10, 11, 12 ; 101) et étant fixées dans les ouvertures traversantes (14 à 17 ; 36 à 39 ; 102, 110) par élargissement plastique des sections de tube sous précontrainte élastique permanente.

12. Vilebrequin selon la revendication 11, caractérisé en ce qu'à chaque fois deux joues de manivelle (9, 10 ; 11, 12) sont formées d'une pièce avec l'un de ces tourillons de liaison (4, 5).

13. Vilebrequin selon la revendication 12, caractérisé en ce que le maneton de vilebrequin (4) qui est d'une pièce avec les joues de manivelles (9, 10)comporte un alésage concentrique (33) pour réduire le poids.

14. Vilebrequin selon la revendication 11, caractérisé en ce qu'il est prévu des tourillons (5) qui consistent en sections de tube lisses, continues, de diamètre constant.

15. Vilebrequin selon la revendication 11, caractérisé en ce qu'il est prévu des tourillons (8) qui présentent dans les surfaces frontales des trous borgnes (53, 54) pour la formation des domaines de liaisons (21, 22).

16. Vilebrequin selon la revendication 11, caractérisé en ce qu'il est prévu des tourillons (6, 7, 8) qui présentent une section de palier moyenne (50, 51, 52) de plus grand diamètre et des domaines de liaison (18 à 22) de plus petit diamètre qui se raccordent à celle-ci.

17. Vilebrequin selon l'une des revendications 14 à 16, caractérisé en ce que les tourillons (6, 7, 8) comprennent d'une pièce les sections de palier (50, 51, 52) et les domaines de liaison (18 à 22).

18. Vilebrequin selon l'une des revendications 14 à 16, caractérisé en ce que les tourillons (6, 7, 8) consistent en des douilles de palier (46, 47 ; 104) munies d'un alésage traversant pour la formation des sections de palier (50, 51) et à chaque fois en des segments de tube (44, 45 ; 102) insérés dans celles-ci et qui dépassent aux extrémités pour la formation de domaines de liaison (18, 19, 20).

19. Vilebrequin selon la revendication 18, caractérisé en ce que la douille de palier (46, 47) et le segment de tube (44, 45) sont liés entre eux dans toute l'ouverture de passage de la douille (46, 47) par élargissement plastique du segment de tube (44, 45) sous précontrainte élastique permanente.

20. Vilebrequin selon la revendication 18, caractérisé en ce que la douille de palier (104) et le segment de tube (102) sont liés entre eux exclusivement dans le domaine des joues de manivelle (101) par élargissement plastique du segment de tube (102) sous précontrainte élastique permanente.

21. Vilebrequin selon l'une des revendications 14 à 20, caractérisé en ce qu'une entaille (13) est prévue dans la surface frontale d'un tourillon (6, 7, 8) au niveau de la transition entre la section de palier (50, 51, 52) et les domaines de liaison (18 à 22).

22. Vilebrequin selon l'une des revendications 14 à 21, caractérisé en ce qu'il est prévu des tourillons (4) dont la section de palier (48) est décalée de façon excentrée par rapport aux domaines de liaison (40, 41).

23. Vilebrequin selon l'une des revendications 14 à 22, caractérisé en ce qu'à chaque fois des joues de manivelle en forme de disque circulaire sont reliés exclusivement à des tourillons à came pour former un vilebrequin à disques.

24. Vilebrequin selon l'une des revendications 11 à 23, caractérisé en ce que des alésages d'amenée d'huile (27, 28, 30 ; 111) qui sont reliés entre eux par l'intermédiaire d'au moins l'un des alésages de tourillon interne (29, 33), partent des passages de palier des tourillons de base (7 ; 102) et des tourillons de palier de bielle (4, 5).

25. Vilebrequin selon la revendication 24, caractérisé en ce qu'un corps cylindrique sous forme d'une douille (31) ou d'un tourillon (34) de plus faible diamètre inséré dans un alésage de tourillon interne (29, 33) constitue une chambre à huile lubrifiante (32, 35) cylindrique annulaire qui est fermée hermétiquement aux deux extrémités.

26. Vilebrequin selon l'une des revendications 11 à 25, caractérisé en ce que les joues (101) et les tourillons (102) ou les coussinets de palier (104) sont munis de cavités ou de saillies de clef adaptées les unes aux autres qui ne permettent qu'une orientation des pièces les unes par rapport aux autres.

27. Vilebrequin selon la revendication 11, caractérisé en ce que l'on utilise des coussinets de palier (104) qui sont munis à l'extérieur des surfaces de palier de collets (141) et/ou de gorges tournées dans la masse (142).

28. Vilebrequin selon la revendication 11, caractérisé en ce qu'on utilise des tourillons (102) qui sont munies de gorges tournées dans la masse (142) à l'extérieur des surfaces de palier.

# FIG. 1

EP 0 315 137 B1

# FIG. 2

EP 0 315 137 B1

FIG 3

"Y"

FIG 4